Europäisches Patentamt

European Patent Office

Office européen des brevets

(19)

(11) Publication number : **0 598 574 A2**

# (12) EUROPEAN PATENT APPLICATION

(21) Application number : **93309091.2**

(22) Date of filing : **12.11.93**

(51) Int. Cl.⁵ : **G06F 15/16**

(30) Priority : **13.11.92 GB 9223790**

(43) Date of publication of application :
**25.05.94 Bulletin 94/21**

(84) Designated Contracting States :
**AT BE CH DE DK ES FR GB GR IE IT LI LU MC NL PT SE**

(71) Applicant : **WHITE CROSS SYSTEMS LIMITED**
**3A Waterside Park,**
**Cookham Road**
**Bracknell, Berkshire RG12 1RB (GB)**

(72) Inventor : **Hadjioannou, John**
**Minster Cottage**
**Sandford Lane, Woodley RG5 4SY (GB)**

(74) Representative : **Driver, Virginia Rozanne et al**
**Page White & Farrer**
**54 Doughty Street**
**London WC1N 2LS (GB)**

(54) **A database server.**

(57) A database server is described which utilises parallel processors, semiconductor memory and disk memory in a system which provides a database server which is both fast and powerful. The database server comprises a plurality of functional units or modules which can be inserted into a system rack. The modules include processor modules, memory modules and power supply modules. The system can be custom-built to include the number of processors, disks and power supply modules which are required to meet the performance, capacity and fault tolerance requirements of a particular system.

FIG. 3

EP 0 598 574 A2

The present invention relates to a database server which utilises parallel processors to process data stored in the database server.

The invention relates specifically to improvements in a database server developed by the present applicants which utilises parallel processors and disk memory in a system which provides a database server which is both fast and powerful. The database server is a computer system comprising a plurality of functional units or modules which can be inserted into a system rack. The modules include processor modules, memory (disk) modules and power supply modules. The system can be custom-built to include the number of processors, disks and power supply modules which are required to meet the performance, capacity and fault tolerance requirements of a particular system.

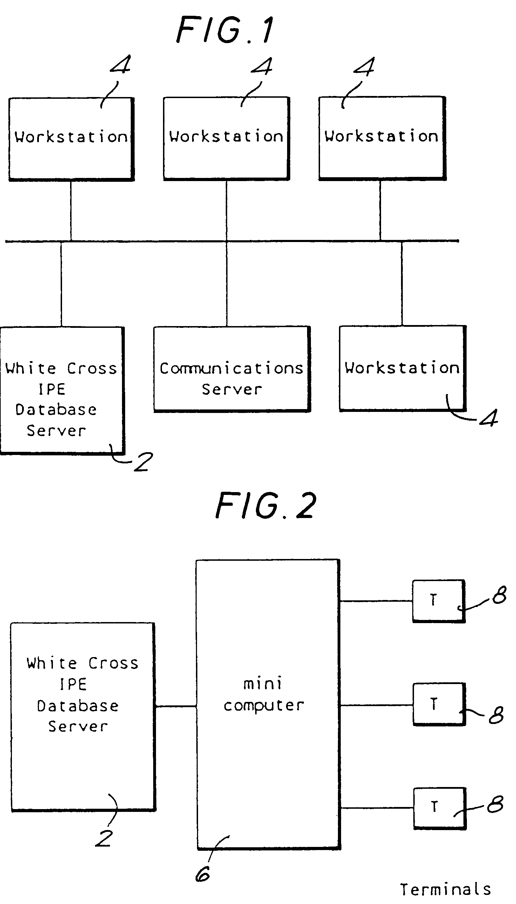

The database server operates with a network of workstations of other computers to receive enquiries and to provide answers to these using the data stored in the database server and the independent processing power available in the database server. Figure 1 shows the connection of a database server 2 into a network of workstations 4. The workstations run software that displays forms, checks for valid enquiry entries and then passes enquiries to the database server. The results of the enquiries are returned to the workstations where they are formatted and displayed as the application dictates. In this system configuration, the workstation acts as host for the application.

Figure 2 shows the connection of a database server 2 to a mini-computer 6 to serve a plurality of users through display terminals 8. Here, the mini-computer hosts the application but passes all database enquiries to the database server. The link to the database server 2 is through one or more local area network connections. Access to the data held in the database server is through the relational database query language SQL.

One of the important features of the database server is its ability to be constructed as a plurality of modules thereby enabling the performance, capacity and fault tolerance characteristics of the system to be selected according to requirements. The present invention is directed to a way in which interconnection between modules can be achieved so that this purpose is satisfied in a simple yet effective fashion. The present invention seeks to achieve the object of keeping to a minimum the number of processors in any communication path. The main object of the present invention is thus to keep all paths as short as possible (in terms of the number of processors connected therein) yet allow the system to be both buildable and expandable and to provide enough communication paths to allow the system to be fault tolerant, should this be required.

Fault tolerance is measured by the extent of tolerance to component failure and is affected by the number of sub-systems or complete systems which are duplicated.

According to one aspect of the present invention there is provided a computer system comprising a plurality of modules, each module including a plurality of operative processors for implementing the function of the module, at least one ring connection processor which has a plurality of communication links including a first set adapted for ring connection and the remaining set(s) of which are adapted to be connected to at least one of the operative processors of the module, and communication circuitry coupled to said first set of communication links, said ring connection processors of said modules being connected via their respective first sets of communication links and associated communication circuitry in a first ring, said first ring including a loop connection processor which has a first set of communication links adapted for connecting said loop connection processor in said first ring and a second set of communication links which are adapted for connecting said loop connection processor to other loop connection processors which are themselves connected in respective other like first rings.

Each module can be configured to provide particular functions for the computer system and in the preferred embodiment is a sub-rack which is made up of a plurality of cards. The cards can include the following:

i) A processor card which comprises a plurality of processors, each capable of carrying out parallel processing and each having associated dedicated memory. In the described embodiment the processors are transputers and each card contains six transputers. As is well known, each transputer has four communication channels or links, each channel supporting bidirectional serial data streams.

ii) A high speed link card which provides communication circuitry to allow communication between the elements of the system. In the described embodiment, each high speed link card contains two high speed optical converters and multiplexors.

iii) A controller card which comprises circuitry for providing system services, e.g. PSU monitoring, temperature monitoring, system booting etc.

iv) A disk card which comprises a high capacity hard disk memory and a controller. In the described embodiment the hard disk is a high capacity SCSI $5^14$ hard disk and the controller is an SCSI controller board.

v) An input/output card which provides six optical channels for communicating to components external of the system.

The modules can comprise three sub-racks configured as follows:

a) a rack system controller sub-rack which comprises a controller card, two processor cards and two high speed link cards;

b) a disk sub-rack which comprises four processor cards, two high speed link cards and four disk cards; and

c) a processor sub-rack which comprises a plurality (e.g. nineteen) of processor cards and two high speed link cards.

It will readily be appreciated that different sub-racks can be configured in accordance with individual requirements, although generally each sub-rack will include at least one processor card and at least one high speed link card. In the preferred embodiment the high speed link cards provide the communication circuitry of the present invention. The important feature of the present invention is the provision on each module of at least one ring connection processor which serves to connect the modules into a first ring. In their turn, a plurality of first rings can be connected together by the loop connection processors which themselves are connected in a loop. In the terminology of the present application each first ring of ring connection processors will be referred to as a "level one" ring, while each loop of loop connection processors will be referred to as a "level two" ring. The connection into "level one" rings via the ring connection processors ensures that the paths of interconnected processors are kept to a minimum, the number being determined by the number of processors in each ring. Preferably there are six ring connection processors and one loop connection processor in each "level one" ring. There are then preferably six loop connection processors in a level two ring.

The principle of the invention can be expanded so that the "level two" ring contains an interconnection processor for a higher level ring which itself then extends to connect similarly organised "level two" rings with their associated "level one" rings. Thus, the system can be expanded in terms of the processing power and memory capacity without affecting the performance of the system.

Each module can contain two ring connection processors which are connected into different first rings, so-called 'A' rings and 'B' rings. This enables a system to be duplicated and thus wholly fault tolerant.

The invention also provides a computer system comprising a plurality of processor modules which each contain a plurality of planes of processors with each plane having a respective ring connection processor which is connected via other operative processors in that plane to at least one processor from each of the other planes in said plurality. With this arrangement a first ring is formed by connecting together the ring connection processors in a common plane of different modules, with a level two ring likewise being formed in said common plane. Thus for each plane there is a level two ring and a plurality of level one rings connected thereby.

As each processor is a parallel processor capable of independently processing data, the computer system can simultaneously process a plurality of queries and can pass results back to the user interface. The ring structure described herein enables communications paths to be kept short and so enables the parallel processing capacity to be used in an optimised manner.

For a better understanding of the present invention and to show how the same may be carried into effect, reference will now be made by way of example to the accompanying drawings, in which:-

Figures 1 and 2 are block diagrams showing two possible uses of a database server;

Figure 3 shows a computer system in block form;

Figures 4a, 4b and 4c are diagrams illustrative of particular sub-racks;

Figure 5 illustrates diagrammatically the connections of processors in a processor sub-rack;

Figure 6 illustrates the connections within one plane of a processor sub-rack;

Figure 7 illustrates the connections within a disk sub-rack;

Figure 8 illustrates the connections within a system controller sub-rack;

Figure 9 shows in principle the interconnections of three sub-racks in a ring;

Figure 10 shows in more detail the interconnections of sub-racks within a rack;

Figure 11 illustrates schematically the connections of sub-racks in level one and level two rings;

Figure 12 shows schematically the connection between sub-racks;

Figure 13 shows how the computer system can be expanded to include more processors; and

Figure 14 shows the connections between individual racks.

A computer system according to one embodiment of the present invention will now be described with reference to the drawings.

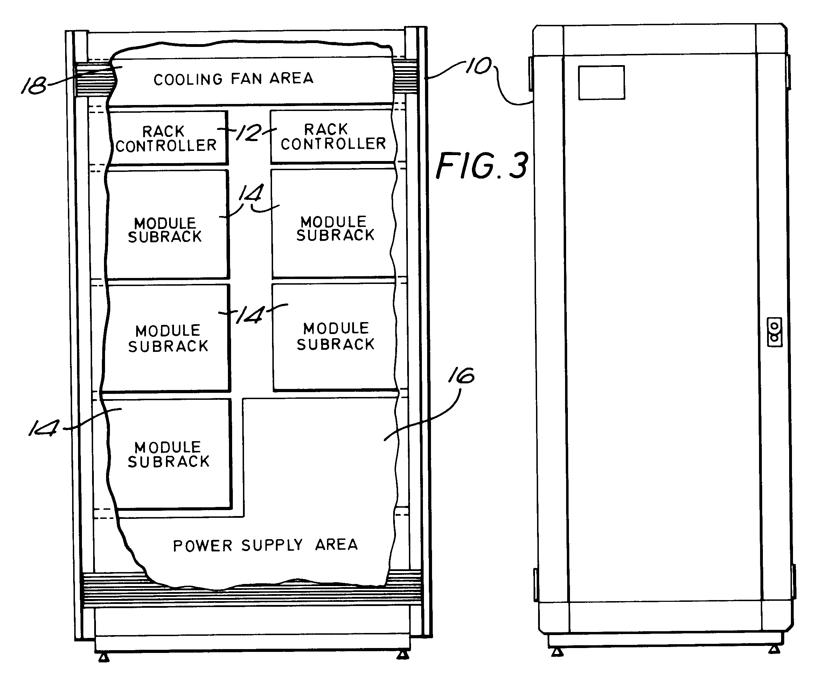

Figure 3 shows one example of a computer system using the modular connections made possible by the present invention. Figure 3 shows a side view (left view) and front view (right view) of a computer system which comprises a housing 10 which contains two rack controller sub-racks 12 and five modular sub-racks 14 which can be selected from the types a) to c) discussed above and described in more detail hereinafter. The housing 10 also includes a power supply area 16 and is thus self-contained with its own main supply etc. The housing 10 also includes a cooling fan area 18.

Figures 4a to 4c illustrate specific examples of the three different types of modular sub-racks.

Figure 4a illustrates a rack/system controller sub-rack which includes a controller card 20, two high speed link cards 22 and two processor cards 24.

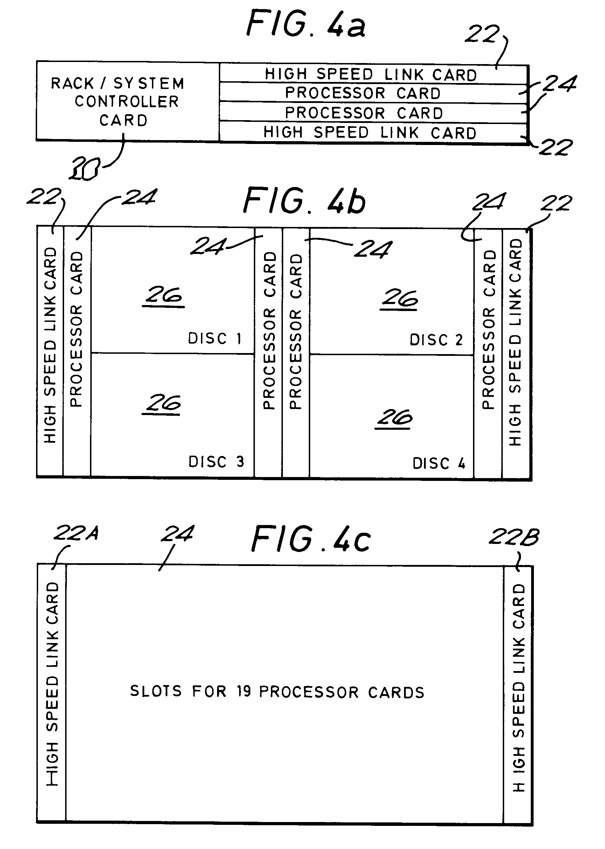

Figure 4b illustrates a disk sub-rack which includes four disk cards 26, four processor cards 24 and two high speed link cards 22.

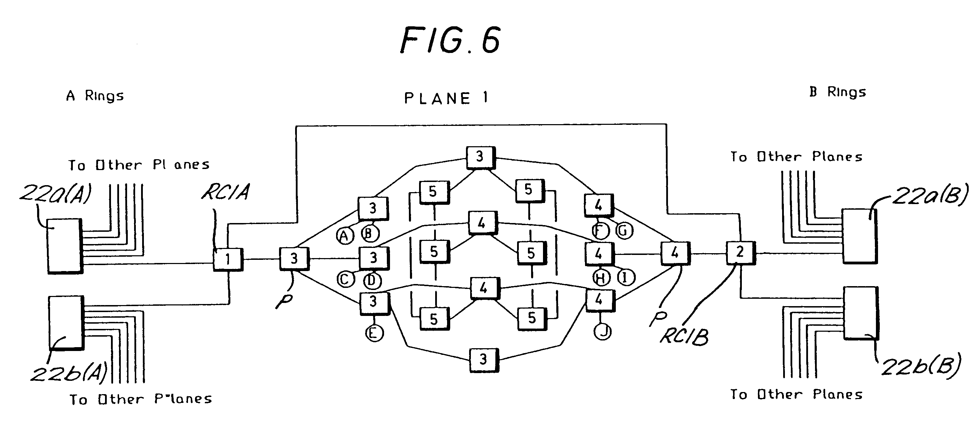

Figure 4c illustrates a processor sub-rack which includes nineteen processor cards which are illustrated diagrammatically by the middle section marked 24 and two high speed link cards 22A,22B. Each high speed link card has two optical convertors 22a,22b (see Figure 6).

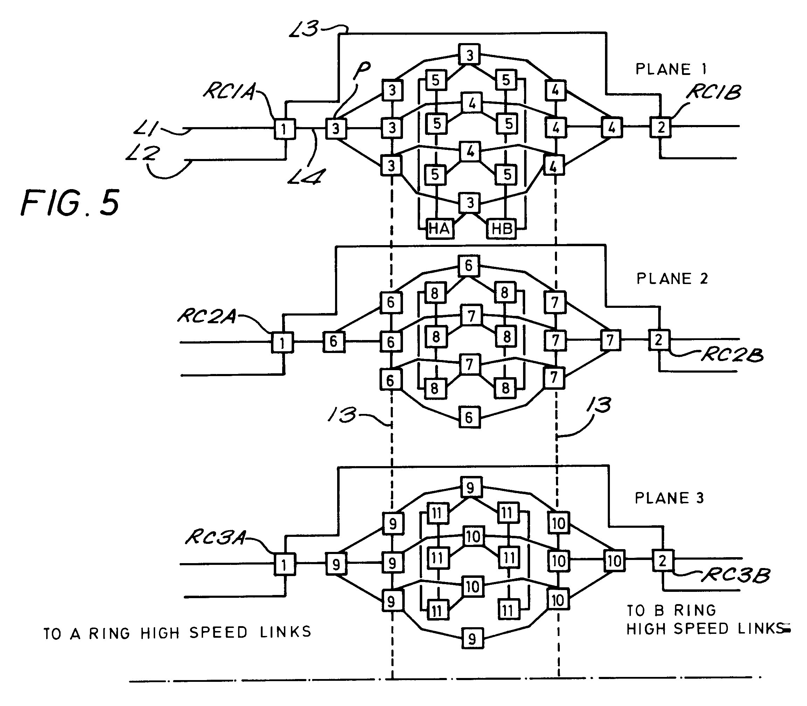

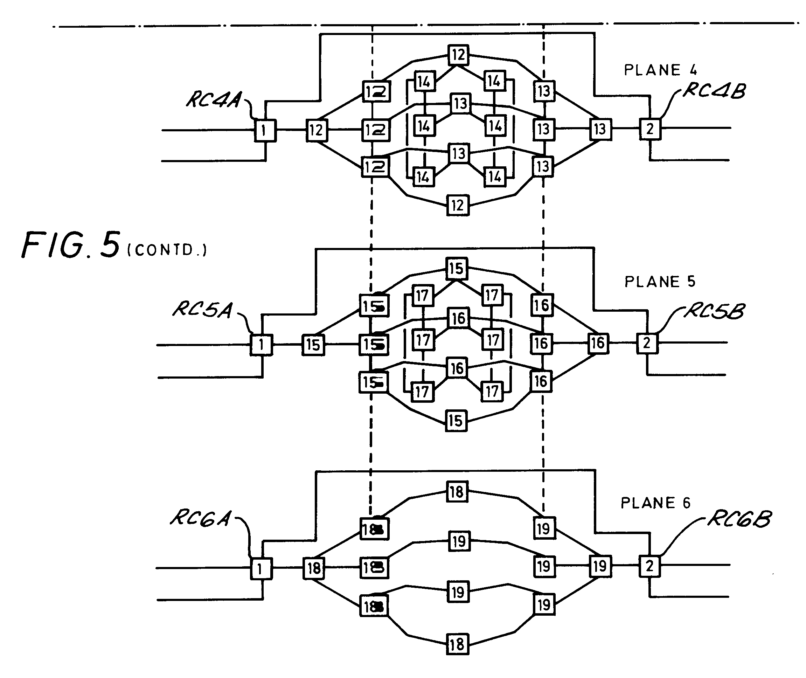

Figure 5 illustrates the construction of a processor sub-rack. Each processor sub-rack comprises a plurality of planes, Plane 1, Plane 2 etc., six as illustrated. As explained above, each processor sub-rack comprises a plurality of processor cards, each processor card including six transputers. In Figure 5, the numbers within the individual boxes denote transputers on a common card. As an example, in plane 1 there can be seen six boxes marked 5 denoting the six transputers on card No. 5. The connections between the transputers in each plane are shown clearly in Figure 5. Each transputer has four communication channels, referred to as links herein, and the lines between the boxes with numbers in them denote these links. Planes Nos. 1 to 5 have identical connections of the transputers on cards in those planes and plane No. 6 differs only in lacking one processor card. Processor card No. 1 provides a set of ring connection transputers and card No. 2 provides another set of six ring connection transputers. The first set of ring connection transputers are for connection into a set of 'A' rings and the second set of ring connection transputers are for connection into a set of 'B' rings. The ring connection transputers are all denoted RC followed by a number denoting the plane and a letter denoting the ring 'A' or 'B'. The dotted lines 13 indicate bus connections between the planes. HA and HB denote transputers located in the high speed link cards 22A,22B. Each ring connection transputer has two of its links L1,L2 which are used for connection of the ring transputers as described later. Another of the links L3 of each ring connection transputer RCA is used to connect that transputer to the ring connection transputer RCB in the same plane. The fourth link L4 of each ring connection transputer RC is connected to another processor P in the same plane which is in turn connected to three further processors on the same card. As an example, consider processor P on card No. 3 coupled to ring connection transputer RCA1 on card No. 1 by link L4. The remaining links of processor P on card No. 3 are connected respectively to three further processors on card No. 3 in plane 1.

These transputers are connected to transputers in other individual planes in a manner described more clearly with reference to Figure 6. Thus, Figure 6 shows plane No. 1 as an example. This Figure shows the links L1 and L2 of the ring connection processors RC1A and RC1B on cards Nos. 1 and 2 connected to respective high speed link optical converters 22a(A),22b(A) on card 22A and 22a(B),22b(B) on card 22B. The other lines leading into the high speed link optical converters 22a,22b represent the links L1 and L2 from the equivalent ring connection processors on planes 2 to 6.

Figure 6 also shows the processors on cards No. 3 and 4 with their links connected to identifying letters A to J. These letters identify processor positions in the remaining planes and the interconnections are made as set forward in Table I. Thus, the processors P on card No. 3 which is connected to the ring connection processors on cards Nos. 1 and 2 via link L4 are therefore connected indirectly to processors in each of the remaining planes. The processors are thus connected in a unique and effective manner.

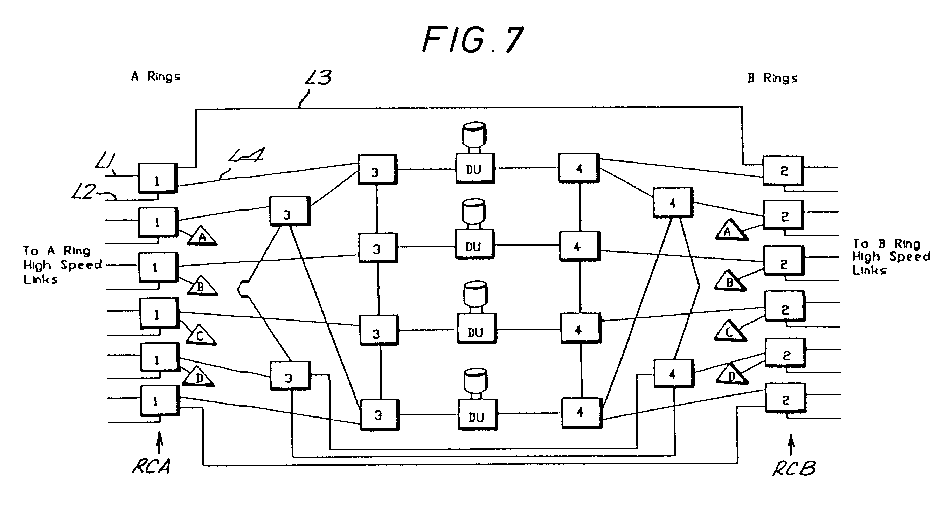

One example of the disk sub-rack is illustrated in Figure 7. This has two processor cards Nos. 1 and 2 for the 'A' and 'B' rings respectively which again have their individual six processors denoted by numbers 1 and 2 and two other processor cards numbered 3 and 4. The capital letters in triangles denote points which are connected to one another. The denotation DU indicates a disk unit. The processors RCA,RCB again each have two links L1,L2 which are passed to optical converters in a manner similar to that illustrated in Figure 6 for the processor sub-rack, i.e. the L1 links going to one converter and the L1 links to the other converter on the same link card, 22A or 22B as appropriate. The L3 link again goes to the corresponding processor on the other card, as before.

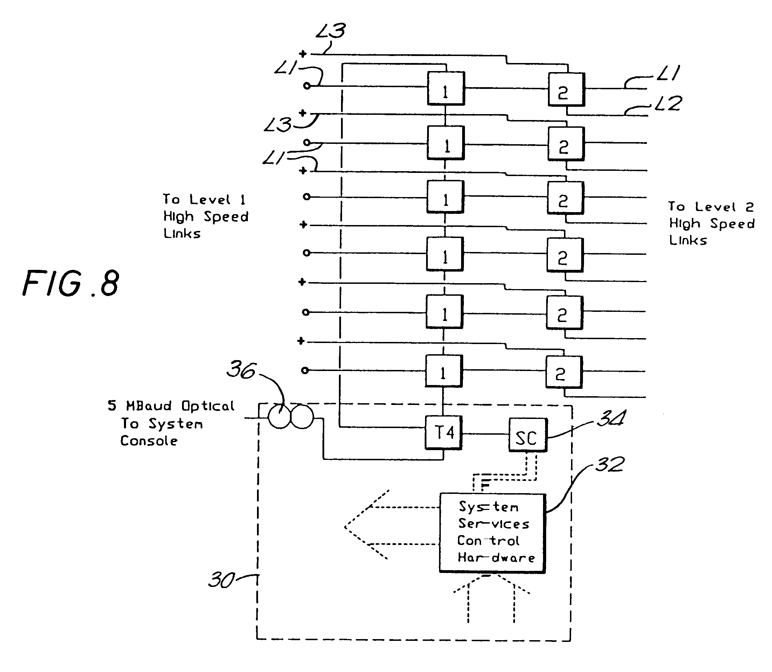

Figure 8 illustrates an example of a system controller sub-rack which has a system controller card denoted by reference numeral 30 which includes system services control hardware 32, a system controller 34 and an MIL (modified Inmos link) optical converter 36. There are again two processor cards, card No. 1 having six transputers which are denoted by reference numeral 1 and card No. 2 having six transputers which are denoted by reference numeral 2. These processors are connected in a manner which is different to the processor and disk sub-racks to enable the coupling of level one rings and level two rings in a manner which will be described. Thus, each of the processors on card No. 1 have one link L1 extending externally while each of the processors on card No. 2 have three links L1,L2,L3 extending externally.

The links L1 of the proceesors on card 1 are fed to an optical converter 22a on a level one high speed link card 22 (points and the links L3 of the processors on card 2 are fed to an optical converter 22b on the same level one high speed link card (points +). The links L1 and L2 of the processors on card No. 2 are fed to respective optical converters on another link card.

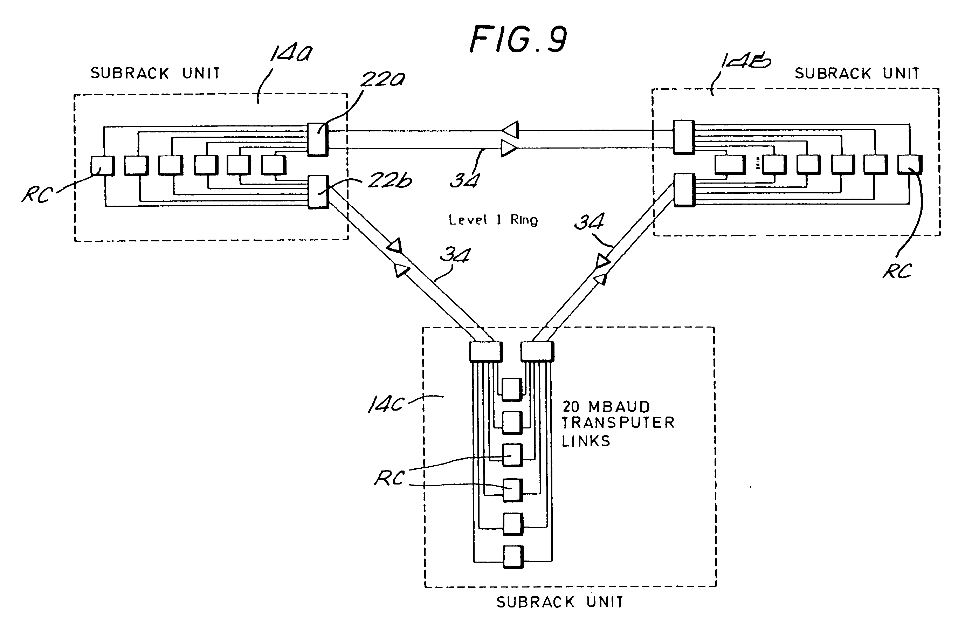

Figure 9 illustrates how three modular sub-racks 14a, 14b and 14c can be connected to form a ring termed herein a level one ring. Thus, the high speed link optical converters 22a,22b associated with each sub-rack are connected to respective similar high speed optical link converters of adjacent sub-racks via bidirectional high speed optical fibre links 34 to form a ring. Thus, the ring can comprise three sub-racks 14a,14b,14c connected as follows: the high speed optical link converter 22a of sub-rack 14a is connected to the high speed optical link converter 22a of the sub-rack 14b while the high speed optical link converter 22b of the sub-rack 14b is connected to the high speed optical link converter 22b of sub-rack 14c while the high speed optical link converter 22a of sub-rack 14c is connected to the high speed optical link converter 22b of sub-rack 14a. Thus, the sub-racks are connected in a "level one" ring. Figure 9 shows how one ring accommodates all the planes of the processor sub-rack since the ring connection transputers are connected to at least one processor in each individual plane. The ring can also thus be considered as six different rings (one for each plane). It will be appreciated that the diagram of Figure 5 shows a structure which enables two such level one rings to be made. These are referred to in Figure 5 as A ring and B ring respectively and are provided for complete fault tolerance. In Figure 9, a ring of processor sub-racks is illustrated which is self-contained. In fact, the ring could contain disk and/or processor sub-racks and would also generally contain a system/rack controller sub-rack as illustrated in Figure 8 to enable the level one ring to be connected into a level two ring as described in the following.

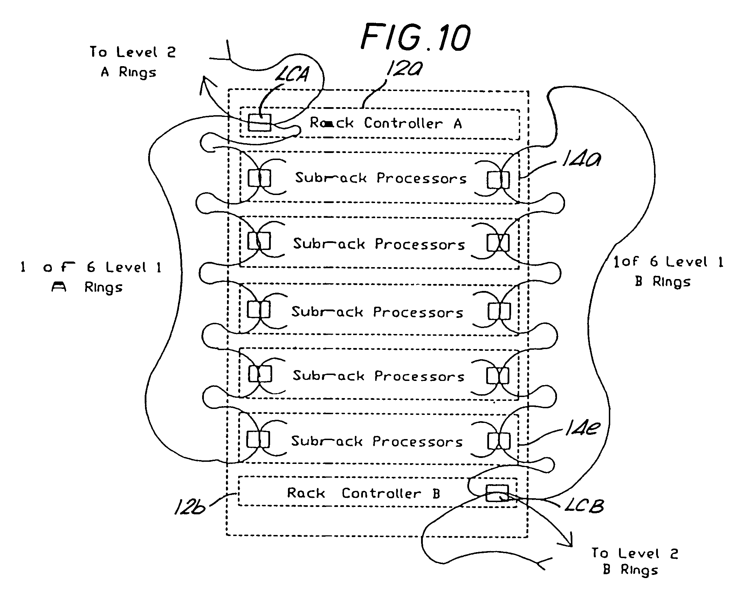

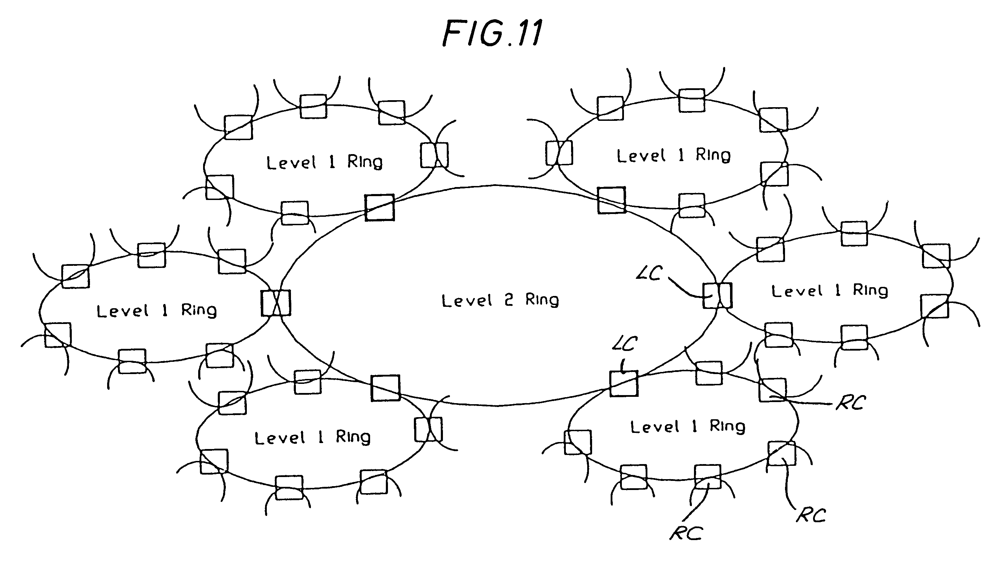

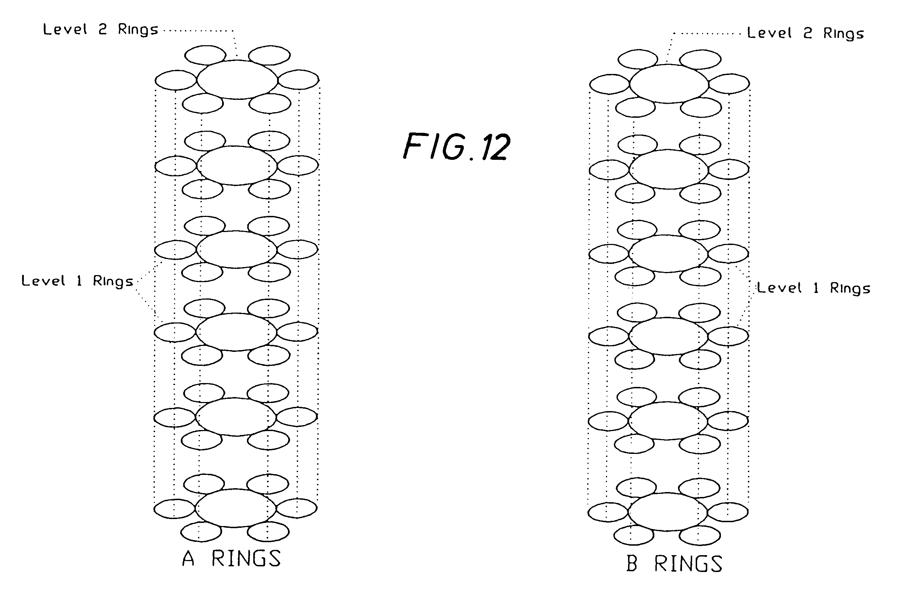

Reference is now made to Figure 10 which illustrates a rack which contains five processor sub-racks 14a to 14e and two rack controller sub-racks 12a,12b. Figure 10 illustrates one of six level one A rings and one of six level one B rings (on the left and right respectively). The level one A ring is constructed for example as shown in Figure 9 except that it also includes connections to the links L1 of the ring connection transputers on card No. 1 on the rack controller sub-rack illustrated in Figure 8 and also to the links L3 of the loop connection transputers LC on the card No. 2. This is denoted diagrammatically in Figure 10 by the level one A ring passing through a loop connection processor LC on rack controller sub-rack 12a and by the level one B ring passing through a loop connection processor LC on the rack controller sub-rack 12b. These loop connection processors then provide further links L1,L2 (see Figure 8) for connection into level two rings. The rack controller sub-racks can thus be used to interlock level one rings into level two rings. This is shown diagrammatically in Figure 11 where the ring connection processors of each level one ring are denoted by RC and each level one ring includes a loop connection processor denoted LC themselves connected in a loop or level two ring. Figure 11 shows a system for one plane of the system: there will be six such planes in fact as illustrated diagrammatically in Figure 12.

The system shown in Figure 12 with two sets of rings, A rings and B rings can be used for fault tolerance. Other arrangements are envisaged where only one set of level one rings would be required but where there would be no fault tolerance. Figure 12 shows the system in which each ring is made up of six transputer links that can be considered as six layers forming a cylinder-like arrangement. Each rack has its own internal ring (a level one ring) that interlocks at one point with a ring which joins together a number of racks (level two ring). As explained above with reference to Figure 9, the six layers of a ring are carried in one pair of optical fibres.

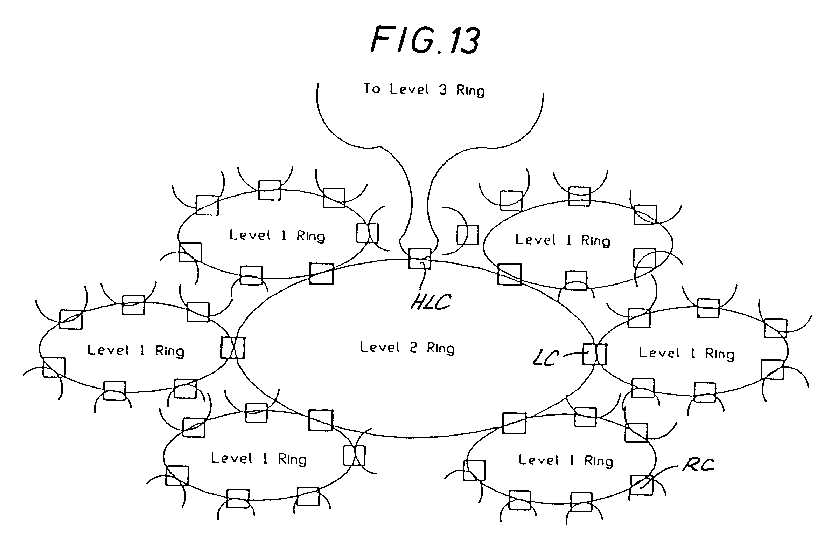

Figure 13 shows how the principle can be expanded so that a higher level ring which is indicated by level three ring in Figure 13 is connected into the level two ring or loop via a higher level connection processor indicated HLC. The principle can be repeated with level four, five and N rings to create systems of any appropriate size but in which the path between individual processors is kept to a minimum.

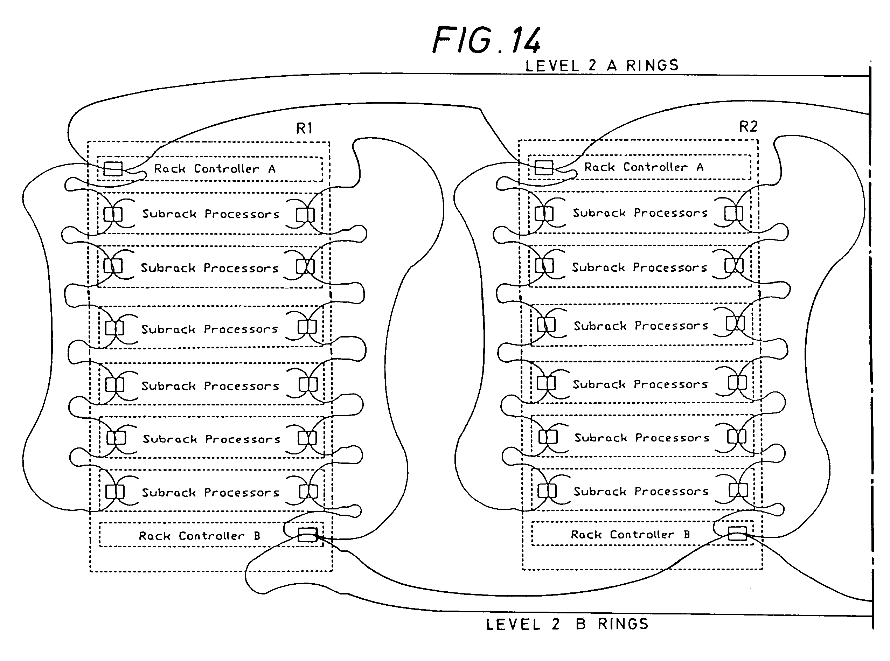

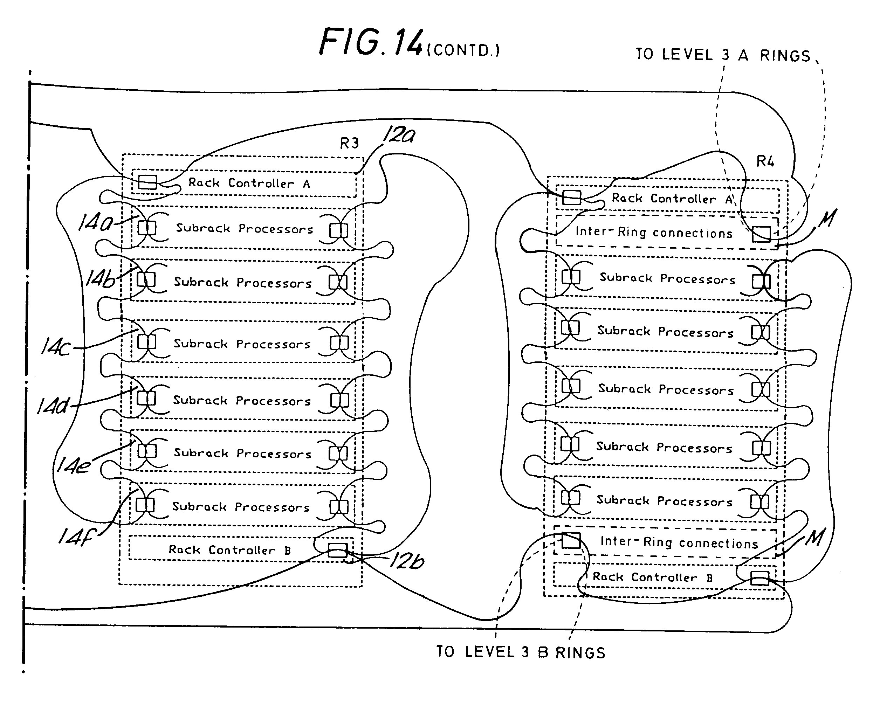

Figure 14 shows the application of the principle illustrated in Figure 13 in practice with four racks R1,R2,R3,R4 wherein each rack has six processor sub-racks 14a to 14f and two rack controller sub-racks 12a,12b. The rack on the extreme right hand side has two further modules M to provide inter-ring connections between the level two and level three rings. This inter-ring connection could be made by a module having a construction similar to that of the rack controller sub-rack.

It will be appreciated that communication between processors at the lowest level is by serial datastreams between the bidirectional ports of the transputers, for example 20 MBaud transputer links. The signals between elements on each card are at TTL level. However the communication between cards within a sub-rack and between processors on different cards is by ECL differential signals for improved noise immunity. The communication between sub-racks, racks and external computer systems is by high speed optical fibres as described above with reference to Figure 9.

As described herein, a computer system is made up of racks, each of which includes a plurality of sub-racks each of which in turn includes a plurality of cards. The invention however extends to the case where racks are formed directly of individual cards, the racks then being connected in rings in a manner akin to that described herein. Such a rack could be connected to similar racks or to racks made up of sub-racks as described herein.

## TABLE I

| Plane | Point | | Plane | Point |
|---|---|---|---|---|
| 1 | A | TO | 2 | A |
| 1 | B | TO | 3 | A |
| 1 | C | TO | 4 | A |
| 1 | D | TO | 5 | A |
| 1 | E | TO | 6 | A |
| 1 | F | TO | 2 | F |
| 1 | G | TO | 3 | F |
| 1 | H | TO | 4 | F |
| 1 | I | TO | 5 | F |
| 1 | J | TO | 6 | F |
| 2 | B | TO | 3 | B |
| 2 | C | TO | 4 | B |
| 2 | D | TO | 5 | B |
| 2 | E | TO | 6 | B |
| 2 | F | TO | 3 | G |
| 2 | G | TO | 4 | G |
| 2 | I | TO | 5 | G |
| 2 | J | TO | 6 | G |
| 3 | C | TO | 4 | C |
| 3 | D | TO | 5 | C |
| 3 | E | TO | 6 | C |
| 3 | H | TO | 4 | H |
| 3 | I | TO | 5 | H |
| 3 | J | TO | 6 | H |

| Plane | Point | | Plane | Point |
|---|---|---|---|---|
| 4 | D | TO | 5 | D |
| 4 | E | TO | 6 | D |
| 4 | I | TO | 5 | I |
| 4 | J | TO | 6 | I |
| 5 | E | TO | 6 | E |
| 5 | J | TO | 6 | J |

Table 1. Inter-plane Connections

## Claims

1. A computer system comprising a plurality of modules, each module including a plurality of operative processors for implementing the function of the module, at least one ring connection processor which has a plurality of communication links including a first set adapted for ring connection and the remaining set(s) of which are adapted to be connected to at least one of the operative processors of the module, and communication circuitry coupled to said first set of communication links, said ring connection processors of said modules being connected via their respective first sets of communication links and associated communication circuitry in a first ring, said first ring including a loop connection processor which has a first set of communication links adapted for connecting said loop connection processor in said first ring and a second set of communication links which are adapted for connecting said loop connection processor to other loop connection processors which are themselves connected in respective other like first rings.

2. A computer system according to claim 1, wherein each module comprises a plurality of cards.

3. A computer system according to claim 2 wherein said plurality of cards includes a processor card which comprises a plurality of processors, each capable of carrying out parallel processing and each having associated dedicated memory.

4. A computer system according to claim 2 or 3, wherein said plurality of cards includes a high speed link card which provides said communication circuitry.

5. A computer system according to claim 4, wherein the high speed link card contains two high speed optical converters and multiplexors.

6. A computer system according to claims 2, 3, 4 or 5, whrein said plurality of cards includes a controller card which comprises circuitry for providing system services.

7. A computer system according to any of claims 2 to 6, wherein said plurality of cards includes a disk card which comprises a high capacity hard disk memory and a controller.

8. A computer system according to any of claims 2 to 7, wherein said plurality of cards includes an input/output card which provides a plurality of optical channels for communicating to components external of the system.

9. A computer system according to claim 1, wherein each module comprises three sub-racks configured as follows:

a) a rack system controller sub-rack which comprises a controller card, two processor cards and two high speed link cards;

b) a disk sub-rack which comprises four processor cards, two high speed link cards and four disk cards; and

c) a processor sub-rack which comprises a plurality of processor cards and two high speed link cards.

10. A computer system according to claim 1, wherein each module comprises a plurality of sub-racks, each sub-rack including at least one processor card and at least one high speed link card.

11. A computer system according to any preceding claim, wherein each module contains two ring connection processors which are connected into different first rings.

12. A computer system according to claim 1, wherein each module contains a plurality of planes of processors with each plane having a respective ring connection processor which is connected via other operative processors in that plane to at least one processor in each of the other planes.

13. A computer system comprising a plurality of processor modules which each contain a plurality of planes of processors with each plane having a respective ring connection processor which is connected via other operative processors in that plane to at least one processor from each of the other planes in said plurality.

14. A computer system according to claim 13, wherein a first ring is formed by connecting together the ring connection processors in a common plane of different modules, with a second ring likewise being formed in said common plane.

# FIG.1

# FIG.2

Terminals

FIG. 3

COOLING FAN AREA

RACK CONTROLLER

RACK CONTROLLER

MODULE SUBRACK

MODULE SUBRACK

MODULE SUBRACK

MODULE SUBRACK

MODULE SUBRACK

POWER SUPPLY AREA

10

12

14

16

18

## FIG. 4a

| | |
|---|---|
| RACK / SYSTEM CONTROLLER CARD | HIGH SPEED LINK CARD |
| | PROCESSOR CARD |
| | PROCESSOR CARD |
| | HIGH SPEED LINK CARD |

22
24
22
20

## FIG. 4b

22
24
24
24
22

| HIGH SPEED LINK CARD | PROCESSOR CARD | 26 DISC 1 | PROCESSOR CARD | PROCESSOR CARD | 26 DISC 2 | PROCESSOR CARD | HIGH SPEED LINK CARD |
| | | 26 DISC 3 | | | 26 DISC 4 | | |

## FIG. 4c

22A
24
22B

| HIGH SPEED LINK CARD | SLOTS FOR 19 PROCESSOR CARDS | HIGH SPEED LINK CARD |
|---|---|---|

FIG. 5

FIG.5 (CONTD.)

PLANE 4

RC4A  RC4B

PLANE 5

RC5A  RC5B

PLANE 6

RC6A  RC6B

EP 0 598 574 A2

# FIG.6

PLANE 1

A Rings

B Rings

To Other Planes

22a(A)

RCIA

To Other Planes

22a(B)

22b(A)

To Other Planes

RCIB

22b(B)

To Other Planes

EP 0 598 574 A2

# FIG.7

A Rings

L3

L1

L2

To A Ring
High Speed
Links

RCA

B Rings

To B Ring
High Speed
Links

RCB

EP 0 598 574 A2

FIG.8

To Level 1
High Speed
Links

To Level 2
High Speed
Links

L3

L1

L2

L3

L1

36

5 MBaud Optical
To System
Console

T4

SC

34

32

System
Services
Control
Hardware

30

1 2

1 2

1 2

1 2

1 2

1 2

FIG.9

FIG.10

To Level 2
A Rings

LCA

12a

Rack Controller A

14a

Subrack Processors

Subrack Processors

1 of 6 Level 1
A Rings

Subrack Processors

1of 6 Level 1
B Rings

Subrack Processors

Subrack Processors

14e

Rack Controller B

12b

LCB

To Level 2
B Rings

EP 0 598 574 A2

# FIG.11

Level 1 Ring

Level 1 Ring

Level 1 Ring

Level 2 Ring

Level 1 Ring

Level 1 Ring

Level 1 Ring

LC

LC

RC

RC

RC

EP 0 598 574 A2

FIG.12

Level 2 Rings

Level 1 Rings

A RINGS

Level 2 Rings

Level 1 Rings

B RINGS

EP 0 598 574 A2

# FIG.13

To Level 3 Ring

Level 1 Ring

Level 1 Ring

HLC

Level 1 Ring

Level 2 Ring

LC

Level 1 Ring

Level 1 Ring

Level 1 Ring

RC

EP 0 598 574 A2

# FIG.14

LEVEL 2 A RINGS

R1

Rack Controller A

Subrack Processors

Subrack Processors

Subrack Processors

Subrack Processors

Subrack Processors

Subrack Processors

Rack Controller B

R2

Rack Controller A

Subrack Processors

Subrack Processors

Subrack Processors

Subrack Processors

Subrack Processors

Subrack Processors

Rack Controller B

LEVEL 2 B RINGS

EP 0 598 574 A2

FIG.14 (CONTD.)

TO LEVEL 3 A RINGS

R3
12a
R4

Rack Controller A
Rack Controller A'
M

14a Subrack Processors
Inter-Ring connections
M

14b Subrack Processors
Subrack Processors

14c Subrack Processors
Subrack Processors

14d Subrack Processors
Subrack Processors

14e Subrack Processors
Subrack Processors

14f Subrack Processors
Subrack Processors

Rack Controller B
12b
Inter-Ring connections
M

Rack Controller B'

TO LEVEL 3 B RINGS

EP 0 598 574 A2